# DEMANDE DE BREVET EUROPEEN

(11) **EP 1 188 727 A1**
(43) Date de publication de la demande: **20.03.2002**
(21) Numéro de dépôt: 01402344.4
(22) Date de dépôt: 12.09.2001
(51) Int. Cl.: C04B 28/08, C04B 7/21

(54) **Un procédé pour limiter le relargage de matières organiques dans l'environnement lors de la réalisation de fondations, et béton susceptible d'être mis en oeuvre dans ledit procédé**

(30) Priorité: 13.09.2000 FR 0011635
(71) Demandeur: COMPAGNIE DU SOL, 92000 Nanterre (FR)
(72) Inventeur: Gouvenot, Daniel, 92000 Nanterre (FR); Vattement, Hubert, 92000 Nanterre (FR)
(74) Mandataire: Nevant, Marc

(57) **Abrégé**

La présente invention concerne un procédé pour limiter le relargage de matières organiques dans l'environnement lors de la réalisation de fondations, selon lequel on utilise un béton à base de laitier de haut fourneau broyé avec une finesse comprise entre environ 2500 et 5000 Blaine.

L'invention concerne également un béton susceptible d'être mis en oeuvre dans ledit procédé.

## Description

La présente invention concerne un procédé pour limiter le relargage de matières organiques dans l'environnement lors de la réalisation de fondations, ainsi qu'un béton susceptible d'être mis en oeuvre dans ledit procédé.

L'invention trouve application notamment dans le domaine de la construction et du bâtiment.

Les ciments traditionnellement utilisés dans les bétons, conduisent à des matériaux dont la rhéologie n'est pas adaptée à la réalisation de pieux ou paroi moulées dans le sol.

Afin d'adapter cette rhéologie aux travaux de fondations, l'utilisateur est contraint d'utiliser des quantités importantes d'adjuvants. Ces quantités importantes de matières organiques sont en partie lixiviées et relarguées dans l'environnement principalement sous l'effet de la filtration pendant la période ou le béton est encore fluide.

Un autre inconvénient de ces bétons est la modification du pH autour de la zone où ils sont mis en place. Cette élévation du pH est principalement provoquée par la dissolution de la chaux contenue dans le liant.

La lixivation et le relargage des matières organiques, conjugués à l'élévation du pH sus-mentionnée, contribuent au déséquilibre de la balance en oxygène des nappes phréatiques.

L'invention se propose de remédier à ces inconvénients au moyen d'un béton qui permet de limiter le relargage desdites matières organiques dans l'environnement.

Ainsi, selon un premier aspect, l'invention concerne un procédé pour limiter le relargage de matières organiques dans l'environnement lors de la réalisation de fondations, selon lequel on utilise un béton à base de laitier de haut fourneau broyé avec une finesse comprise entre environ 2500 et 5000 Blaine (cm²/g), de préférence comprise entre environ 3500 et 4500 Blaine.

Bien que la nature du laitier de haut fourneau ne soit pas particulièrement critique, il est préférable que celui-ci soit du type basique et que le rapport pondéral CaO/SiO₂ soit compris entre environ 1,10 et 1,35. A titre d'exemple de laitier utilisable dans le cadre de la présente invention, on peut citer un matériau comprenant comme composants principaux (en pourcentage en poids), 33 à 40 % de SiO₂, 8 à 16 % de Al₂O₃, 39 à 44 % de CaO, et 4 à 9 % de MgO.

Par ailleurs, il est également préférable que le module chimique du laitier (teneur (%) en CaO x teneur (%) en Al₂O₃) soit supérieur à environ 500.

Le laitier de haut fourneau est avantageusement activé par un agent basique. Comme agent activant utilisable dans le cadre de l'invention, on peut citer un composé à base de chaux, comme la chaux elle-même ou la chaux hydratée (également connue sous le nom de chaux éteinte). Il est également possible d'utiliser un composé à base de sulfate tel que le gypse. Un composé mixte (composé à base de chaux/composé à base de sulfate) convient également ; dans ce cas, le rapport pondéral composé à base de chaux/composé à base de sulfate est généralement compris entre environ 0,3 et 1,5. Il est également possible d'utiliser un ciment tel que par exemple le ciment CLK CEM III/C ou le ciment CPJ CEM II, ce qui permet avantageusement de réaliser l'activation avec très peu de chaux.

Généralement, il est souhaitable d'utiliser une quantité d'agent activant comprise entre environ 2 % et 15 % en poids par rapport au poids du laitier de haut fourneau.

Le béton utilisé dans le procédé conforme à l'invention peut également comprendre un agent défloculant et/ou un agent anti-essorant. Selon un mode de réalisation préféré de l'invention, le béton comprend un agent défloculant et un agent anti-essorant. Par agent anti-essorant on entend au sens de la présente invention un composé qui réduit le phénomène d'expulsion de l'eau libre contenue dans le béton lorsque ce dernier est coulé sous pression.

L'agent défloculant utilisable dans le cadre de l'invention est avantageusement un composé de type phosphonate répondant par exemple aux formules : 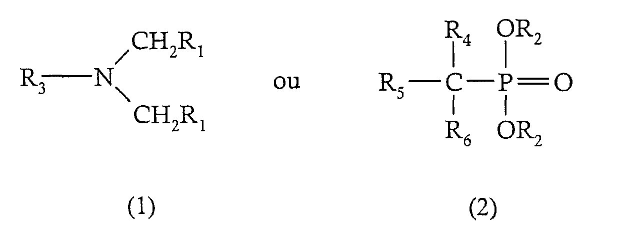 dans lesquelles :
- R₁ représente un groupe de formule 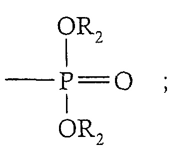
- chaque R₂ représente indépendamment l'hydrogène, un atome de sodium ou un atome de potassium ;
- R₃ représente un groupe -CH₂R₁, 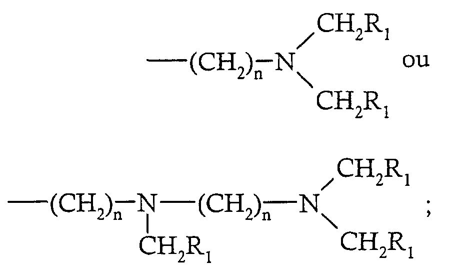
- R₄, R₅ et R₆, indépendamment les uns des autres, représentent un hydroxy, un (C₁-C₄)alkyle ou un groupe R₁ ;
- chaque n indépendamment est égal à 2, 3, 4, 5 ou 6.

A titre d'exemple de composés de type phosphonate avantageux pour la mise en oeuvre de l'invention, on peut citer notamment :
- l'acide hydroxyéthylidène-1,1-diphosphonique,
- l'acide aminotrisméthylènephosphonique,
- l'acide éthylènediaminetétraméthylènephosphonique,
- l'acide diéthylènetriaminepentaméthylènephosphonique ,
- l'acide hexaméthylènediaminetétraméthylènephosphonique,
- ou un sel de sodium ou de potassium de ces acides, l'acide diéthylènetriaminepentaméthylènephosphonique (ou un de ses sels) étant particulièrement préféré.

Généralement, la quantité d'agent défloculant est comprise entre environ 0,05 % et 1,5 % en poids par rapport au poids du laitier de haut fourneau.

L'agent anti-essorant utilisable dans le cadre de l'invention est avantageusement un composé cellulosique comme par exemple la carboxyméthylcellulose, l'hydroxyméthylcellulose, l'hydroxyéthylcellulose, l'hydroxypropylcellulose.

Généralement, la quantité d'agent anti-essorant est comprise entre environ 0,02 % et 0,3 % en poids par rapport au poids du laitier de haut fourneau.

Un tel béton ne nécessite pas ou très peu d'adjuvant du fait qu'il permet de contrôler l'évolution de la rhéologie. De plus, il ne relargue pas, au cours de son utilisation, de matières organiques dans les nappes phréatiques et le pH dans l'environnement immédiat de l'ouvrage fabriqué avec un béton utilsé dans le cadre de l'invention, s'élève beaucoup moins que dans le cas des bétons classiques, ce qui est bénéfique pour l'environnement. Par ailleurs, la teneur en produits solubles contenus dans le béton, notamment en SiO₂ ainsi qu'en ions Ca²⁺ et SO₄²⁻, est significativement réduite.

Ainsi, selon un second aspect, l'invention concerne un béton pour fondations constitué par un mélange comprenant (i) un laitier de haut fourneau, (ii) un agent activant, et (iii) un agent défloculant et/ou un agent anti-essorant, ces constituants étant tels que définis ci-dessus.

Bien évidemment, ce béton comprend également de manière conventionnelle des agrégats constitués de sable et de graviers ou gravillons, qui représentent généralement environ 60 % à 80 % en poids de la composition de béton, ainsi que de l'eau.

L'invention sera mieux comprise à l'aide des exemples suivants, donnés à titre purement illustratif.

### Exemple 1

On prépare un béton en mélangeant les constituants suivants:

| | |
|---|---|
| Laitier de haut fourneau | 380 kg |
| Mélange Ca(OH)₂/gypse | 20 kg |
| Eau | 200 l |
| Agrégats | 1850 kg |

Dans cet exemple, le laitier est broyé avec une finesse de 3500 Blaine. Ce béton possède un maintien de sa maniabilité de 3 heures sans utiliser d'adjuvants. Il ne contient pas de matières organiques, le pH de son eau d'essorage est limité à 11,5/11,8, et il possède un rapport Ca(OH)₂/CaSO₄ de 0,5.

Par comparaison, un béton réalisé avec un ciment traditionnel nécessitera l'utilisation au minimum d'un plastifiant et le pH de l'eau d'essorage se situera vers 12,2 avec un ciment de type CEM III et 12,5 /12,7 avec un ciment de type CEM I.

Le même béton, préparé avec un laitier de haut fourneau ayant une finesse de 4500 Blaine, possède un maintien de sa maniabilité d'environ 2 heures.

### Exemple 2

On prépare un béton en mélangeant les constituants suivants:

| | |
|---|---|
| Laitier de haut fourneau | 370 kg |
| Ciment CPJ CEM II | 30 kg |
| Eau | 200 l |
| Agrégats | 1850 kg |
| Défloculant | 0,8 kg |
| Anti-essorant | 0,15 kg |

Dans cet exemple le laitier est broyé avec une finesse de 4500 Blaine. Ce béton possède un maintien de sa maniabilité d'environ 5 heures, la quantité de son eau d'essorage est divisée par deux par rapport à un béton classique, et le pH de l'eau d'essorage est limité à 11,8. L'anti-essorant utilisé permet de limiter la quantité d'adjuvants organiques.

La combinaison d'un anti-essorant et d'un défloculant supprime en totalité le relargage de matières organiques dans la nappe phréatique. Un béton classique de ce type aurait nécessité l'utilisation d'une plus grande quantité de défloculant retardateur et l'impact sur l'environnement ne serait que très peu amélioré malgré l'utilisation d'un anti-essorant.

## Revendications

1. Procédé pour limiter le relargage de matières organiques dans l'environnement lors de la réalisation de fondations, selon lequel on utilise un béton à base de laitier de haut fourneau broyé avec une finesse comprise entre environ 2500 et 5000 Blaine, de préférence comprise entre environ 3500 et 4500 Blaine.

2. Procédé selon la revendication 1, dans lequel le laitier de haut fourneau est activé au moyen d'un composé à base de chaux, d'un composé à base de sulfate, d'un mélange d'un composé à base de chaux et d'un composé à base de sulfate, ou d'un ciment.

3. Procédé selon la revendication 2, dans lequel l'activation du laitier de haut fourneau est effectuée au moyen d'un mélange d'un composé à base de chaux et d'un composé à base de sulfate, dans un rapport pondéral compris entre environ 0,3 et 1,5.

4. Procédé selon la revendication 2, dans lequel l'activation du laitier de haut fourneau est effectuée au moyen d'un ciment.

5. Procédé selon l'une des revndications 2 à 4, dans lequel on met en oeuvre une quantité comprise entre environ 2 % et 15 % en poids d'agent activant par rapport au poids du laitier de haut fourneau.

6. Procédé selon l'une des revndications 1 à 5, dans lequel le béton comprend également un agent défloculant et/ou un agent anti-essorant.

7. Procédé selon la revendication 6, dans lequel l'agent défloculant est un composé de type phosphonate de formules : 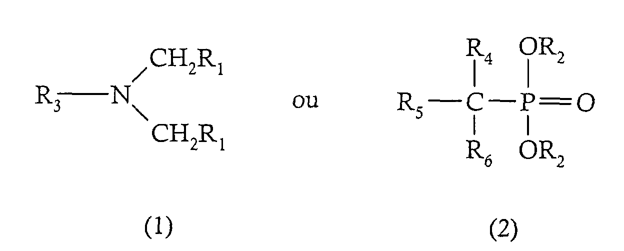 dans lesquelles :
- R₁ représente un groupe de formule 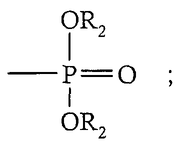
- chaque R₂ représente indépendamment l'hydrogène, un atome de sodium ou un atome de potassium ;
- R₃ représente un groupe -CH₂R₁, 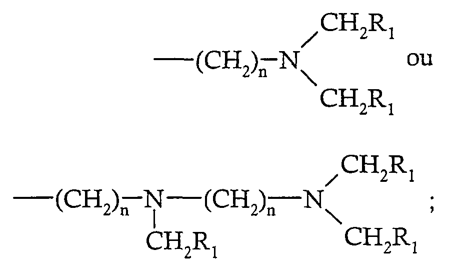
- R₄, R₅ et R₆, indépendamment les uns des autres, représentent un hydroxy, un (C₁-C₄)alkyle ou un groupe R₁ ;
- chaque n indépendamment est égal à 2, 3, 4, 5 ou 6.

8. Procédé selon la revendication 7, dans lequel le composé de type phosphonate est choisi parmi:
- l'acide hydroxyéthylidène-1,1-diphosphonique,
- l'acide aminotrisméthylènephosphonique,
- l'acide éthylènediaminetétraméthylènephosphonique,
- l'acide diéthylènetriaminepentaméthylènephosphonique,
- l'acide hexaméthylènediaminetétraméthylènephosphonique,
- un sel de sodium ou de potassium de ces acides.

9. Procédé selon l'une des revendications 6 à 8, dans lequel on met en oeuvre une quantité d'agent défloculant comprise entre environ 0,05 % et 1,5 % en poids par rapport au poids du laitier de haut fourneau.

10. Procédé selon l'une des revendications 6 à 9, dans lequel l'agent anti-essorant est un composé cellulosique, de préférence la carboxyméthylcellulose, l'hydroxyméthylcellulose, l'hydroxyéthylcellulose, l'hydroxypropylcellulose.

11. Procédé selon l'une des revendications 6 à 10, dans lequel on met en oeuvre une quantité d'agent anti-essorant comprise entre environ 0,02 % et 0,3 % en poids par rapport au poids du laitier de haut fourneau.

12. Procédé selon l'une des revendications 1 à 11, dans lequel le laitier de haut fourneau possède un rapport pondéral CaO/SiO₂ compris entre environ 1,10 et 1,35.

13. Procédé selon l'une des revendications 1 à 12, dans lequel le laitier de haut fourneau possède un module chimique supérieur à environ 500.

14. Béton pour fondations constitué par un mélange comprenant (i) un laitier de haut fourneau, (ii) un agent activant, et (iii) un agent défloculant et/ou un agent anti-essorant, ces constituants étant tels que définis dans les revendications 2 à 13.
